# FASCICULE DE BREVET EUROPEEN

(11) **EP 0 913 959 B1**
(45) Date de publication et mention de la délivrance du brevet: **21.06.2006**
(21) Numéro de dépôt: 98402654.2
(22) Date de dépôt: 26.10.1998
(51) Int. Cl.: H04B 7/155

(54) **Circuit de répéteurs de signaux en modulation de fréquence**
Schaltung mit FM-Zwischenverstärkern
Circuit of FM signal repeaters

(30) Priorité: 30.10.1997 FR 9713753
(43) Date de publication de la demande: 06.05.1999
(73) Titulaire: TDF, 75015 Paris (FR)
(72) Inventeur: Chopin, Jean-Pierre, 01390 Tramoyes (FR); Pelissier, Guy, 42000 Saint-Etienne (FR); Thivillon, Jean-François, 01600 Trevoux (FR)
(74) Mandataire: Cabinet Martinet & Lapoux

(56) Documents cités:
- WO-A-95/31866
- WO-A-97/33381

## Description

La présente invention concerne un circuit de répéteurs de signaux en modulation de fréquence.

En particulier, un circuit de plusieurs répéteurs est inclus dans une station de réception, de transposition et de retransposition de fréquence dont la sortie est reliée à un séparateur de puissance entre deux tronçons d'un câble rayonnant suspendu dans un tunnel routier.

Selon le brevet FR-B-2 559 976, la station fonctionnant en modulation de fréquence est constituée d'une pluralité de répéteurs, dits voies de traitement, comprenant chacun une tête haute fréquence, un commutateur et un circuit de transposition de fréquence.

La tête haute fréquence possède une première entrée reliée à une antenne de réception et une deuxième entrée reliée à un premier oscillateur asservi. Une sortie de la tête haute fréquence délivre un signal à une fréquence intermédiaire égale à la différence entre la fréquence de la porteuse reçue sur la première entrée et la fréquence du premier oscillateur asservi.

Le commutateur commute deux signaux à fréquence intermédiaire. Il possède une première entrée reliée à la sortie de la tête haute fréquence et une deuxième entrée recevant un signal à ladite fréquence intermédiaire et véhiculant un message de service pouvant se substituer au programme radiodiffusé en modulation de fréquence.

Le circuit de transposition de fréquence possède une première entrée reliée à la sortie du commutateur, une deuxième entrée reliée à un deuxième oscillateur asservi et une sortie reliée au séparateur de puissance alimentant le câble rayonnant.

Plus particulièrement, la présente invention est dirigée vers un circuit de répéteurs de signaux en modulation de fréquence tel que défini dans le préambule de la revendication 1, dans lequel chaque répéteur répète précisément un signal en modulation de fréquence respectif reçu mélangé avec les autres signaux en modulation de fréquence.

Un tel circuit de répéteurs de signaux est décrit dans le demande de brevet WO 95/31866. La bande de fréquence du filtre passe-bande ainsi que la fréquence centrale de ce filtre dans un répéteur sont indéterminées dans cette demande de brevet. Au lieu de comprendre deux oscillateurs, chaque répéteur de signal en modulation de fréquence comprend un unique moyen, tel qu'un oscillateur, pour produire un signal à fréquence locale qui est appliqué aux entrées hétérodynes des mélangeurs.

La présente invention vise à fournir un circuit avec des répéteurs de signaux en modulation de fréquence dans lesquels des filtres passe-bande ont des caractéristiques de bande passante communes de manière à réduire le coût des répéteurs.

A cette fin, un circuit répéteur comprenant plusieurs répéteurs parallèles recevant chacun des signaux en modulation de fréquence ayant des fréquences porteuses respectives comprises dans une bande de largeur prédéterminée pour répéter respectivement lesdits signaux en modulation de fréquence, et un moyen pour multiplexer en fréquence les signaux en modulation de fréquence répétés dans les répéteurs,
chaque répéteur pour un signal en modulation de fréquence respectif comprenant des premiers et deuxièmes mélangeurs, un premier mélangeur ayant une première entrée recevant lesdits signaux en modulation de fréquence et produisant un signal à une fréquence porteuse intermédiaire égale à la différence entre la fréquence porteuse d'un signal en modulation de fréquence respectif à répéter et une fréquence locale respective, un deuxième mélangeur ayant une sortie appliquant au moyen pour multiplexer uniquement le signal en modulation de fréquence respectif avec une fréquence porteuse égale à la somme de ladite fréquence porteuse intermédiaire et la fréquence locale respective, un filtre passe-bande interconnecté entre la sortie du premier mélangeur et une première entrée du deuxième mélangeur pour filtrer le signal à fréquence porteuse intermédiaire dans une bande ayant sensiblement la largeur de bande du signal en modulation de fréquence respectif, et un unique moyen pour produire un signal à la fréquence locale respective inférieure à la fréquence porteuse du signal en modulation de fréquence respectif à répéter, à des deuxièmes entrées des premier et deuxième mélangeurs,
est caractérisé en ce que les fréquences porteuses intermédiaires dans tous les répéteurs sont égales à une fréquence porteuse commune, et la bande de fréquence des filtres passe-bande dans tous les répéteurs est centrée sur la fréquence porteuse commune qui est supérieure à la largeur de la bande de l'ensemble des signaux en modulation de fréquence.

Grâce à la fréquence porteuse intermédiaire et la bande de fréquence qui sont communes aux filtres passe-bande dans tous les répéteurs, les filtres passe-bande très sélectifs sont identiques ce qui diminue le coût des répéteurs. Ces dernières caractéristiques conjuguées avec le choix de la fréquence porteuse intermédiaire commune afin qu'elle soit sensiblement supérieure à la largeur de la bande de fréquence de l'ensemble des signaux en modulation de fréquence, suppriment toute intermodulation et tout bruit de fond dans le signal sortant de chaque répéteur qui est ainsi le signal pur respectif en modulation de fréquence initialement émis.

Selon une autre caractéristique, chaque répéteur comprend un amplificateur recevant les signaux en modulation de fréquence, relié à la première entrée du premier mélangeur et ayant un gain commandé par le niveau du signal filtré à fréquence porteuse commune, et de préférence un autre amplificateur à la sortie du deuxième mélangeur. La commande en gain du premier amplificateur compense l'atténuation due au premier mélangeur et maintient constant le niveau moyen du signal en entrée du deuxième mélangeur. Le deuxième amplificateur amplifie le signal en sortie du répéteur atténué par la traversée des deux mélangeurs.

Les moyens pour produire des signaux à fréquences locales respectives dans les répéteurs sont constitués de préférence par un synthétiseur de fréquence programmable. Par exemple, 24 programmes en modulation de fréquence peuvent être sélectionnés.

Le circuit répéteur peut comprendre un modulateur de fréquence relié à une entrée commune de tous les répéteurs pour moduler une porteuse sensiblement à ladite fréquence porteuse commune par un message prédéterminé, en un signal de modulation. Dans chaque répéteur est alors prévu un moyen entre le filtre passe-bande et la première entrée du deuxième mélangeur pour commuter le signal de modulation avec le signal à une fréquence porteuse commune sortant du filtre passe-bande.

De préférence, le circuit répéteur comprend en sortie un filtre passe-bande et un amplificateur de puissance à large bande pour filtrer et amplifier les signaux en modulation de fréquence multiplexés par les moyens pour multiplexer.

Selon une utilisation préférée du circuit répéteur selon l'invention, celui-ci est inclus dans un système de radiocommunication comprenant plusieurs tronçons d'un premier câble rayonnant ayant chacun des première et deuxième extrémités, le câble rayonnant propageant à la fois unidirectionnellement des premiers signaux de radiocommunication et des signaux en modulation de fréquence avec des fréquences porteuses comprises dans une première bande de fréquence et bidirectionnellement des deuxièmes signaux de radiocommunication avec des fréquences porteuses comprises dans une deuxième bande de fréquence supérieure à la première bande de fréquence. Le système comprend, outre le circuit répéteur de signaux en modulation de fréquence conforme à l'invention, des premiers moyens répéteurs pour recevoir et émettre les premiers signaux depuis et vers un réseau de services radioélectriques, une station de base pour recevoir et transmettre des deuxièmes signaux depuis et vers un premier réseau de radiotéléphonie mobile, un moyen multiplexeur-démultiplexeur pour multiplexer en fréquence les signaux en modulation de fréquence sortant du circuit répéteur et les premiers signaux reçus par les premiers moyens répéteurs avec des deuxièmes signaux ayant au moins une fréquence porteuse prédéterminée et reçus par la station de base en un signal multiplex appliqué à la première extrémité d'un premier tronçon du câble rayonnant et pour appliquer des deuxièmes signaux depuis la première extrémité du premier tronçon à la station de base, un moyen de transmission à fibre optique pour transmettre des premiers signaux depuis la deuxième extrémité du dernier tronçon du premier câble rayonnant vers les premiers moyens répéteurs, et plusieurs moyens répéteurs intermédiaires interconnectés chacun entre la deuxième extrémité d'un premier tronçon de câble rayonnant respectif et la première extrémité d'un deuxième tronçon de câble rayonnant respectif, chaque moyen répéteur intermédiaire comprenant un moyen d'amplification et de filtrage pour amplifier et filtrer unidirectionnellement dans la première bande de fréquence les premiers signaux et les signaux en modulation de fréquence depuis la deuxième extrémité du premier tronçon respectif vers la première extrémité du deuxième tronçon respectif, et un deuxième moyen d'amplification et de filtrage pour amplifier et filtrer bidirectionnellement des deuxièmes signaux entre la deuxième extrémité du premier tronçon respectif et la station de base et bidirectionnellement des deuxièmes signaux entre la station de base et la première extrémité du deuxième tronçon respectif.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme détaillé d'un circuit répéteur pour signaux en modulation de fréquence selon l'invention ;
- la figure 2 montre en détail un répéteur pour signal en modulation de fréquence selon l'invention inclus dans le circuit répéteur ; et
- la figure 3 est un bloc-diagramme schématique d'un système de radiocommunication à câble rayonnant comprenant le circuit répéteur pour signaux en modulation de fréquence, plusieurs répéteurs de premiers signaux radioélectriques et plusieurs stations de base de réseaux de radiotéléphonie mobile.

Dans les réalisations préférées décrites ci-après, des valeurs numériques, notamment de bandes de fréquence, sont données à titre d'exemple dans le contexte de services radioélectriques et de la radiotéléphonie mobile sur le territoire français.

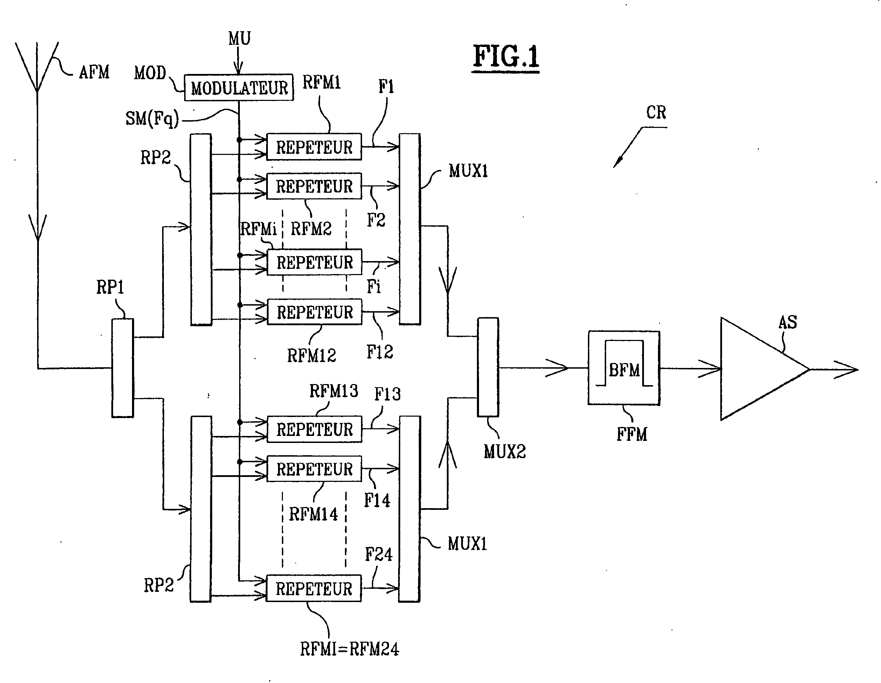

En référence à la figure 1, un circuit répéteur CR régénère I signaux, dit également canaux, en modulation de fréquence qui, selon la réalisation illustrée à la figure 1, sont répartis en deux groupes de I/2 = 12 signaux en modulation de fréquence à filtrer et amplifier respectivement dans des répéteurs RFM1 à RFM12 et RFM13 à RFMI = RFM24.

Les entrées des douze répéteurs de chaque groupe sont reliées aux sorties d'un répartiteur de puissance respectif 1-vers-6 RP2 ayant une entrée reliée à une sortie respective d'un répartiteur de puissance 1-vers-2 RP1 dont l'entrée est reliée à une antenne AFM. L'antenne reçoit simultanément I=24 signaux en modulation de fréquence à filtrer et amplifier respectivement dans les répéteurs RFM1 à RFM24. Les sorties des douze répéteurs de chaque groupe sont reliées aux entrées d'un multiplexeur de fréquence respectif 6-vers-1 MUX1 ayant une sortie reliée à une entrée respective d'un multiplexeur de fréquence 2-vers-1 MUX2 dont la sortie est reliée à un filtre passe-bande FFM suivi d'un amplificateur de sortie à large bande AS.

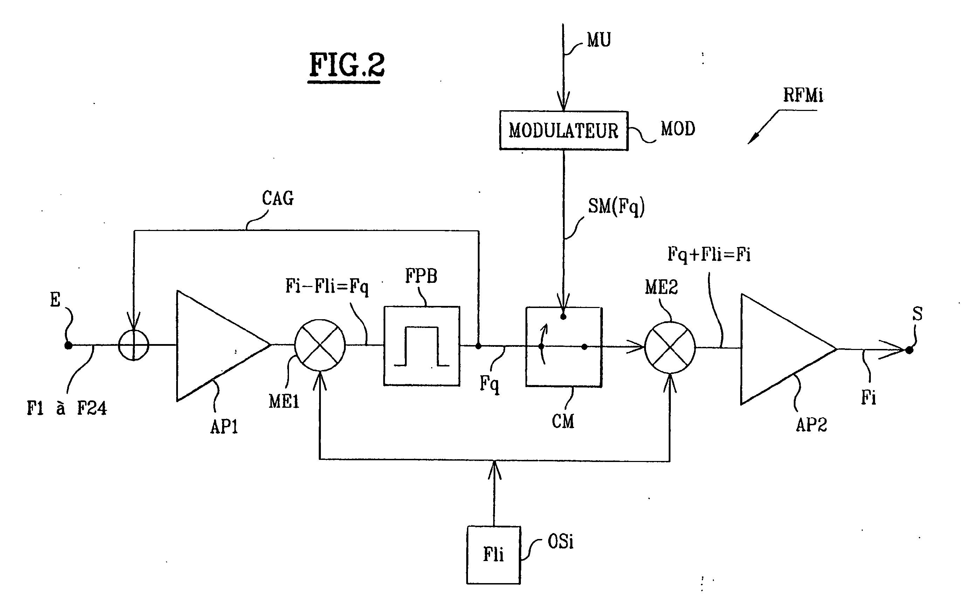

Tous les répéteurs selon l'invention RFM1 à RFM24 étant identiques, à des oscillateurs locaux pour fréquences hétérodynes locales près, l'un d'eux désigné par RFMi est montré en détail à la figure 2, i étant un entier compris entre 1 et I=24.

Le répéteur RFMi comprend depuis une entrée E reliée au répartiteur de puissance respectif 1-vers-6 RP2, un amplificateur à large bande AP1, un premier mélangeur ME1, un filtre passe-bande à quartz à bande passante étroite FPB, un deuxième mélangeur ME2 et un deuxième amplificateur de puissance AP2 dont la sortie S est reliée à une entrée du multiplexeur de fréquence respectif 6-vers-1 MUX1.

Un unique oscillateur OSi applique un signal de fréquence locale Fli à la fois à des deuxièmes entrées des mélangeurs ME1 et ME2. La sortie du mélangeur ME1 produit un signal à une fréquence porteuse intermédiaire Fq = Fi - Fli. La fréquence Fq est indépendante de la fréquence porteuse du signal en modulation de fréquence à répéter et est commune à tous les répéteurs RFM1 à RFMI. La sortie du mélangeur ME2 produit un signal en modulation de fréquence à la fréquence porteuse respective Fi = Fq + Fli.

La fréquence Fi du signal, dit également canal, en modulation de fréquence à répéter par le répéteur RFMi est sélectionnée dans une bande de modulation de fréquence BFM = [87,5 ; 108] MHz de l'ensemble des signaux en modulation de fréquence reçus par le mélangeur ME1, en fonction de la fréquence hétérodyne Fli. En variante, à la place des oscillateurs OS1 à OS24 à fréquences locales dans les répéteurs RFM1 à RFM24, un synthétiseur de fréquence programmable produit 24 signaux à fréquences locales Fl1 à Fl24 réparties dans la largeur de la bande BFM, qui sont appliqués respectivement aux 24 paires de mélangeurs dans les répéteurs.

La bande passante du filtre FPB est centrée sur la fréquence porteuse intermédiaire commune Fq = 21,4 MHz sensiblement supérieure à la largeur de 20,5 MHz de la bande BFM et a la largeur de 160 kHz de chacun des canaux en modulation de fréquence (signaux F1 à FI), ce qui limite en sortie du circuit CR le bruit de fond et la génération de raies d'intermodulation avec des signaux à fréquences porteuses voisines régénérés par les autres répéteurs RFM1 à RFM24. Les filtres FPB dans tous les répéteurs RFM1 à RFMI sont ainsi identiques.

La sortie du filtre FPB est reliée à une borne de commande automatique de gain CAG du premier amplificateur AP1 de manière à adapter le gain de l'amplificateur AP1 au niveau du signal sélectionné en modulation de fréquence.

Le répéteur à modulation de fréquence. RFMi filtre ainsi le signal en modulation de fréquence à la fréquence respective Fi et l'amplifie séparément des autres signaux en modulation de fréquence reçus par l'antenne AFM pour qu'il soit diffusé par exemple par un câble rayonnant à destination d'automobilistes dans un tunnel autoroutier, comme on le verra dans la suite. Le signal à fréquence Fi filtré et amplifié contenant l'information à basse fréquence dans le signal en modulation de fréquence correspondant capté par l'antenne AFM est multiplexé en fréquence avec les I=23 autres signaux en modulation de fréquence. Le circuit répéteur CR traite ainsi en "isofréquence", c'est-à-dire à travers la fréquence intermédiaire commune Fq, la diffusion de chacun des signaux en modulation de fréquence aux fréquences porteuses F1 à FI=F24.

Comme montré aux figures 1 et 2, le circuit répéteur CR comprend un modulateur de fréquence MOD recevant un signal d'urgence à basse fréquence ou numérique MU et relié à une entrée auxiliaire commune des répéteurs RFM1 à RFMI. Le modulateur MOD produit un signal de modulation SM dont la porteuse est modulé en fréquence par le message d'urgence à basse fréquence ou numérique MU. La porteuse du signal SM a une fréquence sensiblement égale à la fréquence porteuse intermédiaire commune Fq. Chaque répéteur RFMi comprend un commutateur CM dont la sortie est reliée à la première entrée du deuxième mélangeur ME2. Les entrées du commutateur sont reliées respectivement à la sortie du filtre passe-bande FPB et à la sortie du modulateur de fréquence MOD. Le signal SM remplace le signal filtré à fréquence Fq sortant du filtre FPB lorsque le commutateur CM est télécommandé pour transmettre un message d'urgence aux terminaux mobiles traversant le tunnel, périodiquement pendant une durée prédéterminée par exemple.

En revenant à la figure 1, les 24 signaux en modulation de fréquence à fréquences porteuses F1 à F24 régénérés dans les répéteurs RFM1 à RFM24 sont multiplexés en fréquence à travers les multiplexeurs MUX1 et MUX2, puis sont filtrés ensemble dans la bande BFM = [87,5 ; 108] MHz dans le filtre FFM et sont amplifiés dans l'amplificateur de puissance à large bande AS.

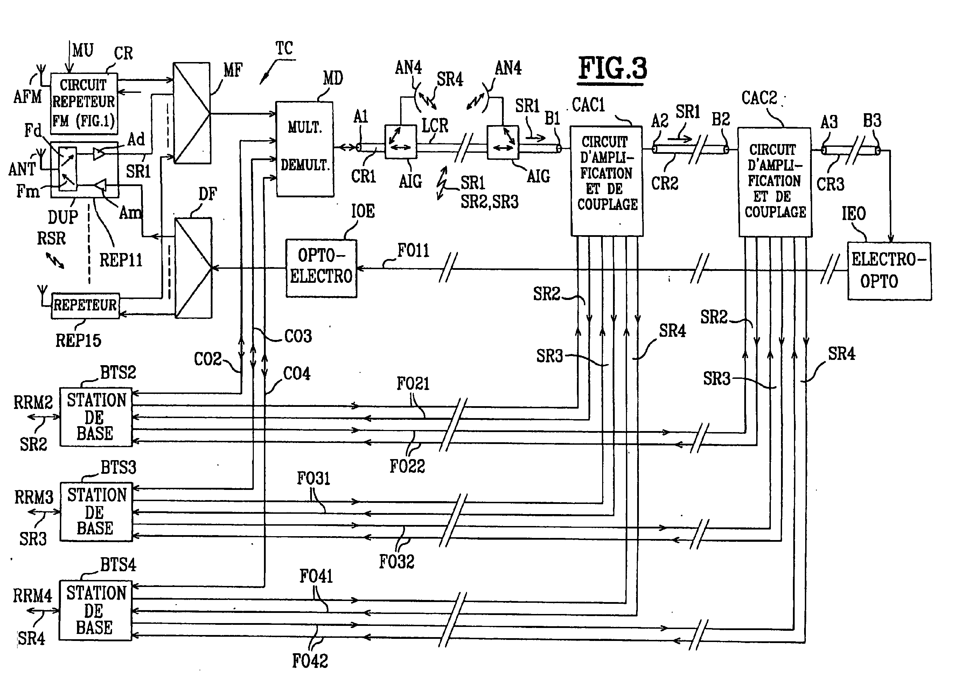

Une réalisation préférée de l'invention d'un système de radiocommunication à câble rayonnant comprenant le circuit répéteur pour signaux en modulation de fréquence CR est décrit en référence à la figure 3.

Le système comprend un câble rayonnant suspendu par exemple au milieu de la voûte d'un tunnel routier. Compte-tenu des pertes linéiques du câble rayonnant, celui-ci est divisé en plusieurs tronçons, par exemple au nombre de 3, CR1, CR2 et CR3 selon la figure 3. La longueur d'un tronçon peut atteindre 1500 mètres environ. Les extrémités des tronçons du câble rayonnant sont reliées deux à deux par des circuits d'amplification et de couplage CAC1 et CAC2. Chaque tronçon du câble rayonnant est composé classiquement d'un câble coaxial dont le conducteur extérieur est percé de fentes réparties de préférence en motifs périodiques.

Les signaux en modulation de fréquence aux fréquences F1 à F24 et des premiers signaux radioélectriques SR1 ont des fréquences comprises dans une première bande de fréquence BF1 et sont propagés dans le câble rayonnant de manière unidirectionnelle depuis une première extrémité A1 du câble rayonnant, confondue avec celle du premier tronçon de câble CR1, reliée à une tête de câble TC vers une seconde extrémité du câble rayonnant B3 confondue avec celle du dernier tronçon de câble CR3.

Le câble rayonnant propage également, mais de manière bidirectionnelle, des deuxièmes signaux radioélectriques SR2, SR3 et SR4 ayant des deuxièmes bandes de fréquence BF2, BF3 et BF4 supérieures à la première bande de fréquence BF1 depuis et vers la première extrémité A1 du premier tronçon de câble CR1, ainsi que depuis et vers des premières extrémités A2 et A3 des deuxième et troisième tronçons de câble rayonnant CR2 et CR3 et depuis et vers des deuxièmes extrémités B1 et B2 des premier et deuxième tronçons de câble rayonnant CR1 et CR2. Les deuxièmes extrémités B1 et B2 des tronçons CR1 et CR2 sont couplées respectivement aux premières extrémités A2, A3 des tronçons CR2 et CR3 à travers les circuits d'amplification et de couplage CAC1 et CAC2.

Typiquement la bande BF1 des fréquences porteuses des signaux en modulation de fréquence et des premiers signaux radioélectriques est comprise entre 30 MHz et 470 MHz. Un réseau de services radioélectriques RSR avec les premiers signaux radioélectriques SR1 recouvre divers services tels que des radiocommunications pour la police, les douanes, les pompiers, la gendarmerie, les taxis et des services de radiomessagerie de type ERMES (European Radio MEssage System). Par exemple, la tête de câble TC comprend, outre le circuit répéteur de signaux en modulation de fréquence CR, cinq répéteurs sélectifs de premiers signaux radioélectriques REP11 à REP15 respectivement pour les sous-bandes utiles de fréquence 31/41 MHz, 68/87,3 MHz, 151/175 MHz, 406/440 MHz et 440/470 MHz.

Chacun des répéteurs REP11 à REP15 comprend, comme montré en détail dans le répéteur REP11 à la figure 3, une antenne ANT, un duplexeur DUP et deux amplificateurs de puissance Ad et Am.

Les premiers signaux radioélectriques SR1 à des fréquences descendantes Fd provenant du réseau de services radioélectriques RSR sont reçus par l'antenne ANT et aiguillés et filtrés par le duplexeur DUP vers l'amplificateur Ad afin de les amplifier, puis les appliquer à la première extrémité A1 du tronçon de câble rayonnant CR1 à travers un multiplexeur de fréquence MF et un multiplexeur-démultiplexeur de fréquence MD à circulateurs et filtres. Le multiplexeur de fréquence MF multiplexe en fréquence les signaux en modulation de fréquence multiplexés F1 à F24 sortant de l'amplificateur de puissance AS du circuit répéteur CR et tous les signaux SR1 à des fréquences descendantes différentes sortant des répéteurs REP11 à REP15 en un signal multiplex en fréquence appliqué à l'entrée du multiplexeur-démultiplexeur MD relié à la première extrémité A1 du câble rayonnant CR1-CR2-CR3. Les signaux en modulation de fréquence et les premiers signaux radioélectriques sont diffusés d'une extrémité A1 à l'autre extrémité B3 du câble rayonnant par les tronçons de câble CR1, CR2 et CR3 vers des terminaux mobiles et sont répétés et amplifiés dans les circuits CAC1 et CAC2.

Certains des terminaux mobiles étant des radiotéléphones, ceux-ci émettent des deuxièmes signaux radioélectriques à des fréquences montantes Fm dont l'énergie est partiellement captée par le câble rayonnant et se propage vers la deuxième extrémité B3 du câble rayonnant. A cette extrémité B3, une interface électro-optique IEO comprend un filtre coupe-bande ayant la largeur de la bande BFM pour ne pas retransmettre les signaux en modulation de fréquence et filtre et convertit les premiers signaux radioélectriques SR1 aux fréquences Fm en des signaux optiques dans une fibre optique FO11 dont l'autre extrémité dans la tête de câble TC est reliée à une interface opto-électrique IOE. Les signaux radioélectriques SR1 à différentes fréquences montantes Fm sortant de l'interface IOE sont démultiplexés dans un démultiplexeur de fréquence DF pour être respectivement amplifiés dans les amplificateurs de puissance Am des répéteurs REP11 à REP15 puis filtrés dans les duplexeurs DUP et émis par les antennes ANT.

La tête de câble TC est reliée à trois réseaux cellulaires de radiotéléphonie mobile indépendants RRM2, RRM3 et RRM4, bien qu'en variante, elle soit reliée au moins à l'un d'entre eux. Chaque réseau de radiotéléphonie mobile est lui-même un sous-réseau du réseau téléphonique commuté public. Chaque réseau RRM2, RRM3, RRM4 comporte une station de base à transmetteur et récepteur BTS2, BTS3, BTS4 incluse dans la tête de câble TC.

Le réseau RRM2 est par exemple un réseau GSM (Global System Mobile) correspondant au réseau cellulaire de radiocommunications de FRANCE TELECOM dont les fréquences porteuses chacune par exemple pour huit canaux numériques multiplexés dans le temps sont comprises dans la bande BF2 de 890 à 947,5 MHz. Les fréquences montantes depuis des terminaux mobiles propres au réseau RRM2 vers des stations de base sont comprises entre 890 et 902,5 MHz. Les fréquences descendantes depuis les stations de base vers les terminaux mobiles sont comprises entre 935 et 947,5 MHz. Le réseau RRM3 est par exemple le réseau de radiotéléphonie SFR/GSM auquel est attribuée la bande de fréquences porteuses 902,5 à 960 MHz, c'est-à-dire une bande de fréquence BF3 imbriquée avec la bande fréquence BF2, les fréquences montantes étant comprises entre 902,5 et 915 MHz et les fréquences descendantes entre 947,5 et 960 MHz. Le réseau RRM4 est le réseau BOUYGUES TELECOM/DCS 1800 ayant une bande de fréquence BF4 nettement plus élevée comprise entre 1710 et 1880 MHz, avec des fréquences montantes de 1710 à 1785 MHz et des fréquences descendantes de 1805 à 1880 MHz.

Dans la tête de câble TC, les stations de base BTS2, BTS3 et BTS4 sont respectivement reliées par des câbles coaxiaux respectifs CO2, CO3 et CO4 à des ports d'entrée/sortie du multiplexeur-démultiplexeur MD et ainsi couplées à la première extrémité A1 du câble rayonnant. Les premières extrémités A2 et A3 des autres tronçons de câble rayonnant CR2, CR3 sont respectivement couplées à des paires de fibres optiques FO21-FO22, FO31-FO32 et FO41-FO42 qui convoient chacune des signaux SR2, SR3 et SR4 à au moins une fréquence porteuse montante respective et à au moins une fréquence porteuse descendante respective. Ainsi, l'extrémité A1 du tronçon CR1 est reliée bidirectionnellement aux stations de base BTS2, BTS3 et BTS4 par le multiplexeur-démultiplexeur MD et les câbles coaxiaux CO2, CO3 et CO4 ; la première extrémité B1 du tronçon suivant CR1 et la deuxième extrémité A2 du tronçon CR2 sont reliées aux stations de base BTS2, BTS3 et BTS4 à travers le circuit d'amplification et de couplage CAC1 et des paires de fibres optiques FO21, FO31 et FO41 ; et la deuxième extrémité B2 du tronçon CR2 et la première extrémité A3 du tronçon suivant CR3 sont reliées aux stations de base BTS2, NTS3 et BTS4 à travers le circuit d'amplification et de couplage CAC2 et des paires de fibres optiques FO22, FO32 et FO42.

Des fréquences porteuses descendantes et montantes différentes pour canaux de radiocommunication sont respectivement fournies aux extrémités A1, B1-A2 et B2-A3 des tronçons de câble rayonnant si bien que le câble rayonnant s'étend dans trois cellules pour chacun des réseaux cellulaires RRM2, RRM3 et RRM4. La première cellule de chaque réseau cellulaire s'étend de l'extrémité A1 du premier tronçon CR1 vers approximativement le milieu de celui-ci. La deuxième cellule de chaque réseau cellulaire s'étend depuis approximativement le milieu du tronçon CR1 vers le milieu du deuxième tronçon CR2. La troisième cellule de chaque réseau cellulaire s'étend approximativement du milieu du tronçon CR2 jusqu'à l'extrémité B3 du dernier tronçon CR3. Un terminal mobile dédié à l'un des réseaux cellulaires se déplaçant dans le tunnel le long du câble rayonnant change quatre fois de cellule lors de la traversée complète du tunnel. Des fonctionnalités des stations de base BTS2, BTS3 et BTS4 sont ainsi déportées dans les circuits CAC1 et CAC2 afin que les extrémités des tronçons de câble rayonnant soient alimentées par des sources de signaux à haute fréquence indépendantes, à l'exception de la deuxième extrémité du dernier tronçon CR3.

Les circuits d'amplification et de couplage CAC1 et CAC2 sont identiques, et comprennent chacun deux voies, une voie unidirectionnelle et une voie bidirectionnelle. La voie unidirectionnelle comprend un amplificateur de puissance linéaire en classe A pour amplifier les signaux en modulation de fréquence et les premiers signaux radioélectriques SR1 à fréquences montantes et descendantes reçus par la deuxième extrémité B1, B2 du tronçon de câble respectif CR1, CR2 de manière à transmettre des premiers signaux radioélectriques amplifiés à la première extrémité A2, A3 du tronçon de câble suivant respectif CR2, CR3. La voie bidirectionnelle transmet des deuxièmes signaux radioélectriques SR2, SR3 et SR4 à fréquences montantes respectivement depuis l'extrémité B1, B2 du tronçon de câble respectif CR1, CR2 et l'extrémité A2, A3 du tronçon de câble suivant respectif CR2, CR3 vers trois fibres optiques F021, F031 et F041 à travers des répéteurs respectifs, et transmet des deuxièmes signaux radioélectriques SR2, SR3 et SR4 à fréquences descendantes depuis les trois autres fibres optiques FO21, FO31 et FO41 respectivement vers l'extrémité B1, B2 du tronçon de câble respectif CR1, CR2 et l'extrémité A2, A3 du tronçon de câble respectif CR2, CR3 à travers les répéteurs respectifs.

Chaque circuit CAC1, CAC2 comprend également des paires de filtres passe-bande respectivement avec des bandes de fréquence contenant chacune une bande de fréquence respective BF1, BF2, BF3 ou BF4. L'entrée et la sortie de l'amplificateur de puissance sont reliées respectivement à l'extrémité de tronçon B1, B2 à travers l'un des filtres à bande de fréquence BF1 et à l'extrémité de tronçon A2, A3 à travers l'autre filtre à bande de fréquence BF1. L'amplificateur AM assure l'interconnexion entre les tronçons de câble respectifs CR1 et CR2, CR2 et CR3 et amplifie les signaux SR1 et les signaux en modulation de fréquence provenant du tronçon de câble CR1, CR2 de manière à compenser la perte linéique dans celui-ci.

Chaque répéteur dans le circuit d'amplification et de couplage CAC1, CAC2, pour des signaux radioélectriques SR2, SR3, SR4 comprend un coupleur directif CO2. Des premier et deuxième ports du coupleur sont reliés respectivement aux extrémités respectives de tronçon B1, B2 et A2, A3 à travers des filtres passe-bande à bande de fréquence respective BF2. Un troisième port du coupleur est couplé aux premier et deuxième ports et relié à un amplificateur de puissance qui amplifie des signaux radioélectriques respectifs SR2, SR3, SR4 à fréquences montantes qui sont ensuite convertis dans une interface optronique en signaux optiques transmis dans l'une respective des paires de fibres optiques FO21, FO31, FO41 ; FO22, FO32, FO42 vers la station de base respective BTS2, BTS3, BTS4. L'autre fibre optique de la paire respective transmet des signaux optiques depuis la station de base BTS2, BTS3, BTS4 qui sont convertis dans l'interface optronique en signaux radioélectriques SR2, SR3, SR4 à fréquences descendantes qui sont amplifiés dans un autre amplificateur de puissance dont la sortie est reliée à un quatrième port du coupleur qui est couplé aux premier et deuxième ports P1 et P2 de celui-ci. L'interface optronique effectue ainsi classiquement des conversions électro-optique et opto-électrique.

Selon d'autres variantes, chaque paire de fibres optiques peut être remplacée par une seule fibre optique fonctionnant en semi-duplex.

Comme montré également à la figure 3, lorsqu'un tronçon de câble rayonnant, tel que le tronçon CR1, est trop long, par exemple supérieur à 300 mètres environ, les signaux radioélectriques SR4 dans la bande de très hautes fréquences BF4=[1710;1880] MHz sont très atténués d'une extrémité à l'autre extrémité. Pour y remédier, deux aiguilleurs AIG sont insérés dans le tronçon de câble rayonnant CR1 à une distance inférieure à environ 300 mètres des extrémités A1 et B1 et ont chacun deux accès respectivement reliés à un long tronçon de câble rayonnant LCR pouvant atteindre une longueur de 500 mètres environ et à une antenne AN4 avec amplificateurs et duplexeur. Le tronçon LCR propage des signaux inférieurs à la bande de fréquence BF4, c'est-à-dire les signaux radioélectriques compris dans les bandes FB1, FB2 et FB3. Les antennes AN4 diffusent dans le tunnel et reçoivent des quatrièmes signaux radioélectriques SR4. Aux fréquences comprises dans la bande BF4, l'atténuation de propagatiàn dans le tunnel est nettement inférieure à celle dans le tronçon de câble rayonnant LCR.

## Revendications

1. Circuit répéteur (CR) comprenant plusieurs répéteurs parallèles (RFM1 à RFM24) recevant chacun des signaux en modulation de fréquence ayant des fréquences porteuses respectives (F1 à FI) comprises dans une bande (BFM) de largeur prédéterminée pour répéter respectivement lesdits signaux en modulation de fréquence, et un moyen (MUX1, MUX2) pour multiplexer en fréquence les signaux en modulation de fréquence (F1 à FI) répétés dans les répéteurs (RFM1 à RFM1),
chaque répéteur (RFMi) pour un signal en modulation de fréquence respectif (Fi) comprenant des premiers et deuxièmes mélangeurs (ME1, ME2), un premier mélangeur (ME1) ayant une première entrée recevant lesdits signaux en modulation de fréquence (F1 à FI) et produisant un signal à une fréquence porteuse intermédiaire (Fq) égale à la différence entre la fréquence porteuse d'un signal en modulation de fréquence respectif à répéter et une fréquence locale respective (Fli), un deuxième mélangeur (ME2) ayant une sortie appliquant au moyen pour multiplexer (MUX1, MUX2) uniquement le signal en modulation de fréquence respectif avec une fréquence porteuse (Fi) égale à la somme de ladite fréquence porteuse intermédiaire (Fq) et la fréquence locale respective (Fli), un filtre passe-bande (FPB) interconnecté entre la sortie du premier mélangeur (ME1) et une première entrée du deuxième mélangeur (ME2) pour filtrer le signal à fréquence porteuse intermédiaire (Fq) dans une bande ayant sensiblement la largeur de bande du signal en modulation de fréquence respectif, et un unique moyen (OSi) pour produire un signal à la fréquence locale respective (Fli) inférieure à la fréquence porteuse (Fi) du signal en modulation de fréquence respectif à répéter, à des deuxièmes entrées des premier et deuxième mélangeurs (ME1, ME2)
**caractérisé en ce que** les fréquences porteuses intermédiaires dans tous les répéteurs (RFM1 à RFMI) sont égales à une fréquence porteuse commune (Fq), et la bande de fréquence des filtres passe-bande (FPB) dans tous les répéteurs est centrée sur la fréquence commune (Fq) qui est supérieure à la largeur de la bande (BFM) de l'ensemble des signaux en modulation de fréquence (F1 à FI).

2. Circuit répéteur conforme à la revendication 1, dans lequel chaque répéteur (RFMi) comprend un amplificateur à large bande (AP1) recevant les signaux en modulation de fréquence (F1 à FI), relié à la première entrée du premier mélangeur (ME1) et ayant un gain commandé par le niveau du signal filtré à fréquence commune (Fq), et de préférence un autre amplificateur (AM2) à la sortie du deuxième mélangeur (ME2).

3. Circuit répéteur conforme à la revendication 1 ou 2, dans lequel les moyens (OSi) pour produire des signaux à fréquences locales respectives (Fli) dans les répéteurs (RFM1 à RFMI) sont constitués par un synthétiseur de fréquence programmable.

4. Circuit répéteur conforme à l'une quelconque des revendications 1 à 3, comprenant un modulateur de fréquence (MOD) pour moduler une porteuse sensiblement à ladite fréquence commune (Fq) par un message prédéterminé (MU), en un signal de modulation (SM), et dans lequel chaque répéteur (RFMi) comprend un moyen (CM) entre le filtre passe-bande (FPB) et la première entrée du deuxième mélangeur (ME2) pour commuter le signal de modulation (SM) et le signal à fréquence commune (Fq) sortant du filtre passe-bande (FPB).

5. Circuit répéteur conforme à l'une quelconque des revendications 1 à 4, comprenant un filtre passe-bande (BFM) et un amplificateur de puissance à large bande (AS) pour filtrer et amplifier les signaux en modulation de fréquence multiplexés par les moyens pour multiplexer (MUX1, MUX2).

6. Système de radiocommunication comprenant plusieurs tronçons (CR1, CR2, CR3) d'un premier câble rayonnant ayant chacun des première et deuxième extrémités (A1,B1 ; A2,B2 ; A3,B3), le câble rayonnant propageant à la fois unidirectionnellement des premiers signaux de radiocommunication (SR1) et des signaux en modulation de fréquence (F1 à FI) avec des fréquences porteuses comprises dans une première bande de fréquence (BF1) et bidirectionnellement des deuxièmes signaux de radiocommunication (SR2) avec des fréquences porteuses comprises dans une deuxième bande de fréquence (BF2) supérieure à la première bande de fréquence (BF1), un circuit répéteur de signaux en modulation de fréquence (CR) conforme à l'une quelconque des revendications 1 à 5, des premiers moyens répéteurs (REP11 à REP15) pour recevoir et émettre les premiers signaux (SR1) depuis et vers un réseau de services radioélectriques (RSR), une station de base (BTS2) pour recevoir et transmettre des deuxièmes signaux (SR2) depuis et vers un premier réseau de radiotéléphonie mobile (RRM2), un moyen multiplexeur-démultiplexeur (MF, MD) pour multiplexer en fréquence les signaux en modulation de fréquence sortant du circuit répéteur (CR) et les premiers signaux (SR1) reçus par les premiers moyens répéteurs (REP11 à REP15) avec des deuxièmes signaux (SR2) ayant au moins une fréquence porteuse prédéterminée et reçus par la station de base en un signal multiplex appliqué à la première extrémité (A1) d'un premier tronçon (CR1) du câble rayonnant et pour appliquer des deuxièmes signaux (SR2) depuis la première extrémité (A1) du premier tronçon (CR1) à la station de base (BTS2), un moyen de transmission à fibre optique (FO11) pour transmettre des premiers signaux (SR1) depuis la deuxième extrémité (B3) du dernier tronçon (CR3) du premier câble rayonnant vers les premiers moyens répéteurs (REP1), et plusieurs moyens répéteurs intermédiaires (CAC1, CAC2) interconnectés chacun entre la deuxième extrémité (B1, B2) d'un premier tronçon de câble rayonnant respectif (CR1, CR2) et la première extrémité (A2, A3) d'un deuxième tronçon de câble rayonnant respectif (CR2, CR3), chaque moyen répéteur intermédiaire (CAC1, CAC2) comprenant un moyen d'amplification et de filtrage pour amplifier et filtrer unidirectionnellement dans la première bande de fréquence les premiers signaux (SR1) et les signaux en modulation de fréquence (F1 à FI) depuis la deuxième extrémité (B1, B2) du premier tronçon respectif (CR1, CR2) vers la première extrémité (A2, A3) du deuxième tronçon respectif (CR2, CR3), et un deuxième moyen d'amplification et de filtrage (REP2) pour amplifier et filtrer bidirectionnellement des deuxièmes signaux (SR2) entre la deuxième extrémité (B1, B2) du premier tronçon respectif (CR1, CR2) et la station de base (BTS2) et bidirectionnellement des deuxièmes signaux (SR2) entre la station de base (BTS2) et la première extrémité du deuxième tronçon respectif.

## Claims

1. Repeater circuit (CR) comprising a plurality of parallel repeaters (RFM1 to RFM24) each receiving frequency modulation signals having respective carrier frequencies (F1 to FI) contained within a band (BFM) of a predetermined width for respectively repeating said frequency modulation signals, and means (MUX1, MUX2) for frequency multiplexing the frequency modulation signals (F1 to FI) repeated in the repeaters (RFM1 to RFM24),
each repeater (RFMi) for a respective frequency modulation signal (Fi) comprising first and second mixers (ME1, ME2), a first mixer (ME1) having a first input receiving said frequency modulation signals (F1 to FI) and producing a signal of an intermediate carrier frequency (Fq) equal to the difference between the carrier frequency of a respective frequency modulation signal which is to be repeated and a respective local frequency (Fli), a second mixer (ME2) having an output applied to the means (MUX1, MUX2) for multiplexing only the respective frequency modulation signal having a carrier frequency (Fi) equal to the sum of said intermediate carrier frequency (Fq) and the respective local frequency (Fli), a band-pass filter (FPB) interconnected between the output of the first mixer (ME1) and a first input of the second mixer (ME2) for filtering the signal of the intermediate carrier frequency (Fq) in a band having substantially the bandwidth of the respective frequency modulation signal, and a single means (OSi) for producing a signal at the respective local frequency (Fli) which is less than the carrier frequency (Fi) of the respective frequency modulation signal which is to be repeated, at second inputs of the first and second mixers (ME1, ME2),
**characterised in that** the intermediate carrier frequencies in all the repeaters (RFM1 to RFMI) are equal to a common carrier frequency (Fq), and the frequency band of the band-pass filters (FPB) in all the repeaters is centred on the common frequency (Fq) which is greater than the bandwidth (BFM) of all the frequency modulation signals (F1 to FI).

2. Repeater circuit according to claim 1, wherein each repeater (RFMi) comprises a broadband amplifier (AP1) receiving the frequency modulation signals (F1 to FI), which is connected to the first input of the first mixer (ME1) and having a gain controlled by the level of the signal filtered at a common frequency (Fq), and preferably another amplifier (AM2) at the output of the second mixer (ME2).

3. Repeater circuit according to claim 1 or 2, wherein the means (OSi) for producing signals of respective local frequencies (Fli) in the repeaters (RFM1 to RFMI) consist of a programmable frequency synthesiser.

4. Repeater circuit according to any one of claims 1 to 3, comprising a frequency modulator (MOD) for modulating a carrier substantially at said common frequency (Fq) by a predetermined message (MU), into a modulating signal (SM), and wherein each repeater (RFMi) comprises a means (CM) between the band-pass filter (FPB) and the first input of the second mixer (ME2) for switching the modulating signal (SM) and the common frequency signal (Fq) leaving the band-pass filter (FPB).

5. Repeater circuit according to any one of claims 1 to 4, comprising a band-pass filter (FPB) and a broadband power amplifier (AS) for filtering and amplifying the frequency modulation signals multiplexed by the multiplexing means (MUX1, MUX2).

6. Radiocommunications system comprising a plurality of sections (CR1, CR2, CR3) of a first radiating cable, each having first and second ends (A1, B1; A2, B2; A3, B3), the radiating cable propagating both unidirectionally first radiocommunication signals (SR1) and frequency modulation signals (F1 to FI) with carrier frequencies contained within a first frequency band (BF1) and bidirectionally second radiocommunication signals (SR2) with carrier frequencies contained within a second frequency band (BF2) which is greater than the first frequency band (BF1), a repeater circuit (CR) for frequency modulation signals according to any one of claims 1 to 5, first repeater means (REP11 to REP15) for receiving and transmitting the first signals (SR1) from and to a radio service network (RSR), a base station (BTS2) for receiving and transmitting the second signals (SR2) from and to a first mobile radiotelephony network (RRM2), multiplexing/demultiplexing means (MF, MD) for frequency multiplexing the frequency modulation signals leaving the repeater circuit (CR) and the first signals (SR1) received by the first repeater means (REP11 to REP15) with second signals (SR2) having at least one predetermined carrier frequency and received by the base station into a multiplex signal applied to the first end (A1) of a first section (CR1) of the radiating cable and for applying second signals (SR2) from the first end (A1) of the first section (CR1) to the base station (BTS2), fibre-optic transmission means (FO11) for transmitting first signals (SR1) from the second end (B3) of the last section (CR3) of the first radiating cable to the first repeater means (REP1), and a plurality of intermediate repeater means (CAC1, CAC2) each interconnected between the second end (B1, B2) of a first respective section of radiating cable (CR1, CR2) and the first end (A2, A3) of a second respective section of radiating cable (CR2, CR3), each intermediate repeater means (CAC1, CAC2) comprising amplifying and filtering means for amplifying and filtering, unidirectionally, in the first frequency band, the first signals (SR1) and the frequency modulation signals (F1 to FI) from the second end (B1, B2) of the respective first section (CR1, CR2) to the first end (A2, A3) of the respective second section (CR2, CR3), and second amplifying and filtering means (REP2) for amplifying and filtering second signals (SR2) bidirectionally between the second end (B1, B2) of the respective first section (CR1, CR2) and the base station (BTS2) and bidirectionally second signals (SR2) between the base station (BTS2) and the first end of the respective second section.

## Patentansprüche

1. Regeneratorschaltung (CR), bestehend aus mehreren parallelen Regeneratoren (RFM1 bis RFM24), von denen jeder frequenzmodulierte Signale mit den zugehörigen Trägerfrequenzen (F1 bis FI) innerhalb einer vorgegebenen Bandbreite (BFM) zu deren Regenerierung empfängt, und einer Vorrichtung (MUX1, MUX2) zum Frequenz-Multiplexen der in den Regeneratoren (RFM1 bis RFMI) regenerierten frequenzmodulierten Signale (F1 bis F6),
wobei jeder Regenerator (RFMi) für jeweils ein frequenzmoduliertes Signal (Fi) Folgendes umfasst: einen ersten und zweiten Mischer (ME1, ME2), wobei der erste Mischer (ME1) einen ersten Eingang zum Empfangen der frequenzmodulierten Signale (F1 bis FI) und zur Erzeugung einer Zwischenträgerfrequenz (Fq) gleich der Differenz zwischen der Trägerfrequenz eines jeweils zu regenerierenden frequenzmodulierten Signals und einer jeweiligen lokalen Frequenz (Fli) hat und der zweite Mischer (ME2) einen Ausgang zur alleinigen Aufschaltung auf die Vorrichtung zum Multiplexen (MUX1, MUX2) des jeweiligen frequenzmodulierten Signals mit einer Trägerfrequenz (Fi) gleich der Summe der Zwischenträgerfrequenz (Fq) und der jeweiligen lokalen Frequenz (Fli) hat; einen Bandpassfilter (FPB), geschaltet zwischen den Ausgang des ersten Mischers (ME1) und einen ersten Eingang des zweiten Mischers (ME2), zum Filtern des Signals mit der Zwischenträgerfrequenz (Fq) innerhalb eines Bandes mit im Wesentlichen der Bandbreite des jeweiligen frequenzmodulierten Signals, und eine einzige Vorrichtung (OSi) zur Erzeugung eines Signals mit der jeweiligen lokalen Frequenz (Fli) unterhalb der Trägerfrequenz (Fi) des jeweiligen zu regenerierenden frequenzmodulierten Signals an den zweiten Eingängen des ersten und zweiten Mischers (ME1, ME2),
**dadurch gekennzeichnet, dass** die Zwischenträgerfrequenzen in allen Regeneratoren (RFM1 bis RFMI) einer gemeinsamen Trägerfrequenz (Fq) entsprechen und dass das Frequenzband der Bandpassfilter (FPB) in allen Regeneratoren auf die gemeinsame Frequenz (Fq) ausgerichtet ist, die höher als die Bandbreite (BFM) der Gesamtheit der frequenzmodulierten Signale (F1 bis FI) ist.

2. Regeneratorschaltung nach Anspruch 1, bei der jeder Regenerator (RFM1) einen die frequenzmodulierten Signale (F1 bis FI) empfangenden Breitbandverstärker (AP1), der mit dem ersten Eingang des ersten Mischers (ME1) verbunden ist und dessen Verstärkungsgrad durch das Niveau des bei der gemeinsamen Frequenz (Fq) gefilterten Signal gesteuert wird, und vorzugsweise einen weiteren Verstärker (AM2) am Ausgang des zweiten Mischers (ME2) umfasst.

3. Regeneratorschaltung nach Anspruch 1 oder 2, bei der die Vorrichtungen (OSi) zur Erzeugung von Signalen mit den jeweiligen lokalen Frequenzen (Fli) in den Regeneratoren (RFM1 bis RFMI) von einem programmierbaren Frequenzsynthesizer gebildet werden.

4. Regeneratorschaltung nach einem beliebigen der Ansprüche 1 bis 3, einen Frequenzmodulator (MOD) umfassend zum Modulieren einer Trägerfrequenz im Wesentlichen mit der gemeinsamen Frequenz (Fq) zu einem Modulationssignal (SM) mittels einer vorgegebenen Nachricht (MU) und bei der jeder Regenerator (RFMi) zwischen dem Bandpassfilter (FPB) und dem ersten Eingang des zweiten Mischers (ME2) eine Vorrichtung (CM) zum Umschalten des Modulationssignals (SM) und des aus dem Bandpassfilter (FPB) kommenden Signals mit der gemeinsamen Frequenz (Fq) umfasst.

5. Regeneratorschaltung nach einem beliebigen der Ansprüche 1 bis 4, einen Bandpassfilter (BFM) und einen Breitbandleistungsverstärker (AS) umfassend zum Filtern und Verstärken der frequenzmodulierten Signale nach deren Multiplexung durch die Vorrichtungen zum Multiplexen (MUX1, MUX2).

6. Funksystem, das Folgendes umfasst: mehrere Abschnitte (CR1, CR2, Cr3) eines ersten Strahlkabels, von denen jeder ein erstes und zweites Ende hat (A1, B1; A2, B2; A3, B3), wobei das Strahlkabel gleichzeitig unidirektional erste Funksignale (SR1) und frequenzmodulierte Signale (F1 bis FI) mit Trägerfrequenzen innerhalb eines ersten Frequenzbandes (BF1) und bidirektional zweite Funksignale (SR2) mit Trägerfrequenzen innerhalb eines über dem ersten Frequenzband (BF2) liegenden zweiten Frequenzbandes (BF2) aussendet; eine Regeneratorschaltung für frequenzmodulierte Signale (CR) nach einem beliebigen der Ansprüche 1 bis 5; erste Regeneratorvorrichtungen (REP11 bis REP15) zum Empfangen und Senden der ersten Signale (SR1) aus einem bzw. in ein Funkdienstenetz (RSR), eine Basisstation (BTS2) zum Empfangen und Übertragen der zweiten Signale (SR2) aus einem bzw. in ein erstes Mobilfunktelefonienetz (RRM2), eine Multiplexer-Demultiplexer-Vorrichtung (MF, MD) zum Frequenz-Multiplexen der aus der Regeneratorschaltung (CR) kommenden frequenzmodulierten Signale und der von den ersten Regeneratorvorrichtungen (REP11 bis REP15) empfangenen ersten Signale (SR1) mit den von der Basisstation empfangenen zweiten Signalen (SR2) mit mindestens einer vorgegebenen Trägerfrequenz zu einem Multiplex-Signal, das auf das erste Ende (A1) eines ersten Abschnitts (CR1) des Strahlkabels aufgeschaltet wird, sowie zum Aufschalten der zweiten Signale (SR2) vom ersten Ende (A1) des ersten Abschnitts (CR1) auf die Basisstation (BTS2), eine Lichtleiter-Übertragungsvorrichtung (FO11) zum Übertragen der ersten Signale (SR1) vom zweiten Ende (B3) des letzten Abschnitts (CR3) des ersten Strahlkabels zu den ersten Regeneratorvorrichtungen (REP1) und mehrere Zwischenregeneratorvorrichtungen (CAC1, CAC2), von denen jede jeweils zwischen das zweite Ende (B1, B2) des zugehörigen ersten Abschnitts des Strahlkabels (CR1, CR2) und das erste Ende (A2, A3) des zugehörigen zweiten Abschnitts des Strahlkabels (CR2, CR3) geschaltet ist, wobei jede Zwischenregeneratorvorrichtung (CAC1, CAC2) Folgendes umfasst: eine Verstärker- und Filtervorrichtung zum unidirektionalen Verstärken und Filtern der ersten Signale (SR1) und der frequenzmodulierten Signale (F1 bis FI) innerhalb des ersten Frequenzbandes jeweils zwischen dem zweiten Ende (B1, B2) des ersten Abschnitts (CR1, CR2) und dem ersten Ende (A2, A3) des zweiten Abschnitts (CR2, CR3) und eine zweite Verstärker- und Filtervorrichtung (REP2) zum bidirektionalen Verstärken und Filtern der zweiten Signale (SR2) jeweils zwischen dem zweiten Ende (B1, B2) des ersten Abschnitts (CR1, CR2) und der Basisstation (BTS2) sowie der zweiten Signale (SR2) zwischen der Basisstation (BTS2) und dem jeweiligen ersten Ende (A2, A3) des zweiten Abschnitts (CR2, CR3).
